# EUROPÄISCHE PATENTANMELDUNG

(11) **EP 4 778 786 A1**
(43) Veröffentlichungstag der Anmeldung: **22.07.2026**
(21) Anmeldenummer: 25227406.3
(22) Anmeldetag: 29.12.2025
(51) Int. Cl.: B60P 3/36, B60P 7/08, B60P 3/00

(54) **MODULARES INNENAUSBAUSYSTEM FÜR KRAFTFAHRZEUGE SOWIE MÖBELMODUL UND SOCKELMODUL HIERFÜR**

(30) Priorität: 17.01.2025 DE 102025101619
(71) Anmelder: VanSein e.K., 82433 Bad Kohlgrub (DE)
(72) Erfinder: CELLARY, Sven, 73614 Schorndorf (DE); KRAMER, Christian, 82433 Bad Kohlgrub (DE); HENKEL, Philipp, 73630 Remshalden (DE); LORENZ, Paul, 82433 Bad Kohlgrub (DE)
(74) Vertreter: Kuhnen & Wacker Patent- und Rechtsanwaltsbüro PartG mbB

(57) **Zusammenfassung**

Die Erfindung betrifft ein Modulares Innenausbausystem für Kraftfahrzeuge, insbesondere zur Ausbildung eines Wohnmobil-Innenausbaus mit
- einer Bodenstruktur (2) aufweisend eine Mehrzahl von zueinander parallellaufenden Befestigungsschienen (3), welche sich in einer Fahrzeuglängsrichtung (L) erstrecken
- wenigstens einem Möbelmodul erster Art (10), welches eingerichtet und ausgebildet ist, mittelbar oder unmittelbar mechanisch lösbar, insbesondere formschlüssig mit den Befestigungsschienen (3) verbunden zu werden, wobei
- die Befestigungsschienen (3) entlang ihrer Längsrichtung (L) ein Längsraster mit einem Längsrastermaß (LRM) zur Ausbildung der mechanisch lösbaren, insbesondere formschlüssigen Verbindung zwischen der Befestigungsschiene (3) und dem Möbelmodul erster Art (10) aufweisen und
- die Befestigungsschienen (3) in einer Fahrzeugquerrichtung (Q) in einem Querraster mit einem Querrastermaß (QRM) zueinander angeordnet sind,
wobei ein Grundriss (G) des wenigstens einen Möbelmoduls erster Art (10) eine Breite (B) und eine Tiefe (T) besitzt, wobei sowohl die Breite (B) ein erstes ganzzahliges Vielfaches des Längsrastermaßes (LRM) als auch die Tiefe (T) ein zweites ganzzahliges Vielfaches des Längsrastermaßes (LRM) sind sowie ein Möbelmodul (10) und ein Sockelmodul (20) hierfür.

## Beschreibung

Die Erfindung betrifft ein modulares Innenausbausystem für Kraftfahrzeuge, insbesondere zur Ausbildung eines Wohnmobil-Innenausbaus sowie ein Möbelmodul/Funktionsmodul und ein Sockelmodul hierfür.

Aus dem Stand der Technik sind eine Vielzahl von modularen Innenausbausystemen bekannt, welche zum Innenausbau eines Kraftfahrzeugs, insbesondere eines Kastenwagens oder dergleichen, zu einem Wohnmobil geeignet sind. Derartige modulare Innenausbausysteme besitzen beispielsweise ein Küchenmodul, ein Kleiderschrankmodul, ein Oberschrankmodul, ein Bettmodul, ein Tischmodul oder dergleichen, welche über eine Bodenfläche eines Fahrzeugs verteilt in dem Fahrzeug angeordnet werden oder in einem Bereich der Seitenwandungen des Kraftfahrzeugs an dieser befestigt werden.

Weiterhin ist es aus dem Stand der Technik bekannt, einzelne Module, zum Beispiel ein Tischmodul in einem fertig ausgebauten Fahrzeug an verschiedenen Stellen befestigen zu können und so je nach momentaner Nutzung des Kraftfahrzeugs eine gewisse Variabilität zu erhalten. Außerdem ist es bekannt, beispielsweise Sitzmöbelmodule bzw. Sitzmöbeleinbauten durch Umbau in ein Bett zu verwandeln.

Trotz der Vielfalt der bereits bekannten Innenausbausysteme besteht weiterhin ein Bedürfnis, die Flexibilität der Anordnung verschiedener Möbelmodule und/oder Funktionsmodule weiter zu steigern. Insbesondere soll ein einfach zu variierendes, insbesondere während des Betriebs des Kraftfahrzeugs als Wohnmobil, also im Fertigzustand des Fahrzeugs außerhalb der Herstellerfabrik, leicht umzubauendes und hinsichtlich der Platzausnutzung im Innenraum des Kraftfahrzeugs optimiertes Innenausbausystem angegeben werden, bei welchem zudem auch bei einer Neuanordnung der Möbelmodule/Funktionsmodule auf einer Bodenstruktur eines Kraftfahrzeugs nur minimale Lücken und Leerräume entstehen. Gleichfalls soll es ermöglicht sein, in beliebiger Art und Weise Möbelmodule und/oder Funktionsmodule bezüglich des Kraftfahrzeugs entlang der Fahrzeuglängsrichtung oder gedreht entlang einer Fahrzeugquerrichtung einsetzen und an der Bodenstruktur befestigen zu können. Sämtliche vorzunehmenden Bedienschritte zur Neuanordnung von Möbelmodul/Funktionsmodulen sollen einfach durchführbar sein. Insbesondere soll mit einfachen Mitteln eine ausreichend feste Befestigung der Möbelmodule/Funktionsmodule am Fahrzeug herstellbar sein.

Außerdem soll ein Möbelmodul/Funktionsmodul sowie ein Sockelmodul angegeben werden, welches sich zur Ausbildung des Innenausbausystems eignet.

Diese Aufgaben werden mit einem modularen Innenausbausystem für Kraftfahrzeuge mit den Merkmalen des Anspruchs 1 gelöst. Vorteilhafte Ausführungsformen sind in den hiervon abhängigen Ansprüchen angegeben. Hinsichtlich des Möbelmoduls/Funktionsmoduls sowie hinsichtlich des Sockelmoduls werden die oben erwähnten Aufgaben mit einem Möbelmodul/Funktionsmodul und einem Sockelmodul mit den Merkmalen des Anspruchs 18 bzw. 19 gelöst.

Ein erfindungsgemäßes modulares Innenausbausystem für Kraftfahrzeuge, insbesondere zur Ausbildung eines Wohnmobil-Innenausbaus besitzt
- eine Bodenstruktur, aufweisend eine Mehrzahl von zueinander parallellaufenden Befestigungsschienen, welche sich in einer Fahrzeuglängsrichtung erstrecken,
- wenigstens ein Möbelmodul/Funktionsmodul erster Art (im Folgenden: Möbelmodul erster Art), welches eingerichtet und ausgebildet ist, mittelbar oder unmittelbar mechanisch lösbar, insbesondere formschlüssig mit den Befestigungsschienen verbunden zu werden,
- wobei die Befestigungsschienen entlang ihrer Längsrichtung ein Längsraster mit einem Längsrastermaß zur Ausbildung der mechanisch lösbaren, insbesondere formschlüssigen Verbindung zwischen der Befestigungsschiene und dem Möbelmodul erster Art aufweisen, und
- die Befestigungsschienen in einer Fahrzeugquerrichtung in einem Querraster mit einem Querrastermaß zueinander angeordnet sind,
- wobei ein Grundriss des wenigstens einen Möbelmoduls erster Art eine erste Breite und eine erste Tiefe besitzt, wobei sowohl die erste Breite ein erstes ganzzahliges Vielfaches des Längsrastermaßes als auch die erste Tiefe ein zweites ganzzahliges Vielfaches des Längsrastermaßes sind.

Mit einem solchen modularen Innenausbausystem gelingt es, die erfindungsgemäß gestellten Aufgaben zu lösen.

Bei einer vorteilhaften Ausführungsform weist das modulare Innenausbausystem wenigstens ein Möbelmodul/Funktionsmodul zweiter Art ( im Folgenden Möbelmodul zweiter Art) auf, dessen Grundriss eine zweite Breite und eine zweite Tiefe besitzt, wobei die zweite Breite und/oder die zweite Tiefe unterschiedlich oder gleich zur ersten Breite oder der ersten Tiefe sind und sowohl die zweite Breite ein zweites ganzzahliges Vielfaches des Längsrastermaßes als auch die zweite Tiefe ein zweites ganzzahliges Vielfaches des Längsrastermaßes sind.

Durch diese Maßnahme wird das modulare Innenausbausystem um Möbelmodule/Funktionsmodule mit unterschiedlichen Grundrissen G erweitert, so dass die Flexibilität und die Vielfalt der herstellbaren möglichen Innenausbauten erhöht ist.

Weiterhin kann es vorteilhaft sein, dass die Möbelmodule Wandungen besitzen, welche einen Innenraum umgrenzen, und vertikal wirkende Zugbefestigungsmittel zum Zusammenwirken mit korrespondierenden vertikalen Zugbefestigungsmitteln eines anderen Möbelmoduls aufweisen, die Zugbefestigungsmittel im Innenraum angeordnet und vom Innenraum her bedienbar sind.

Derartige Maßnahmen stellen zum einen eine sichere, insbesondere in vertikaler Richtung verspannte Montage übereinander gestapelter Möbelmodule/Funktionsmodule dar. Zum anderen kann eine Bedienbarkeit der Zugbefestigungsmittel vom Innenraum der Möbelmodule/Funktionsmodule her in vorteilhafter Art und Weise gewährleisten, dass glatte und nicht unterbrochene Außenflächen der Möbelmodule gewährleistet werden können. Auch bei eng benachbart zueinander gestapelten und eng beieinander stehenden Möbelmodulen sind die entsprechenden Zugbefestigungsmittel ohne weiteres auch vom Innenraum aus verschließbar und auch wieder lösbar.

Zweckmäßig ist außerdem, dass das modulare Innenausbausystem wenigstens ein Sockelmodul umfasst, welches eine Bodenbefestigungseinrichtung zur Befestigung an den Befestigungsschienen und wenigstens eine Modulbefestigungseinrichtung zum Zusammenwirken mit dem Zugbefestigungsmittel des Möbelmoduls aufweist.

Ein Sockelmodul ist insbesondere dazu geeignet, als ein Adaptermodul zwischen der Zugbefestigungseinrichtung der Möbelmodule und einer Bodenbefestigungseinrichtung zur Befestigung an der Bodenstruktur zu wirken.

Bei einer weiteren Ausführungsform des modularen Innenausbausystems sind mehrere Möbelmodule vertikal übereinander stapelbar und mittels der Zugbefestigungsmittel im gestapelten Zustand miteinander in Vertikalrichtung vorgespannt verbindbar.

Dies erhöht die Flexibilität und die Vielfalt möglicher Innenausbauten.

Zur einfachen, insbesondere werkzeuglosen Verbindung zweier übereinander gestapelter Möbelmodule hat es sich bewährt, dass die Zugbefestigungsmittel der Möbelmodule Schnapphakenverbindungen sind, die mit vertikal verlaufenden Zugstreben zusammenwirken.

Um einerseits eine großflächige Krafteinleitung in eine Wandung des Möbelmoduls/Funktionsmoduls zu erreichen, kann es zweckmäßig sein, dass eine Zugkraftübertragung der Zugbefestigungsmittel in die Wandung des Möbelmoduls im Bereich eines vertikal mittleren Drittels der Wandung erfolgt.

Weiterhin kann es andererseits zur Vermeidung von lokalen Spannungsspitzen innerhalb der Wandung des Möbelmoduls durch Einleitung von Zug-/Scherkräften, also insbesondere zur schonenden Krafteinleitung in die Wandungen der Möbelmodule zweckmäßig sein, dass dies mittels formschlüssiger, z.B. verzahnter Einbettung der Zugstrebe in die Wandung entlang einer Längserstreckung der Zugstrebe erfolgt.

Zur weiteren Entlastung von Möbelmodulwandungen, insbesondere bei einem hohen Kraftaufkommen, wie es beispielsweise durch dynamische Belastungen in einem sich bewegenden oder scharf abbremsenden Fahrzeug geschehen kann, ist es zweckmäßig, dass die Zugstrebe vertikal durchgehend ausgebildet ist. Somit bilden die Zugstreben gestapelter Möbelmodule/Funktionsmodule einen durchgehenden Lastpfad, welcher durch dessen Vorspannung in vertikaler Richtung in der Lage ist, einen weit überwiegenden Teil der dynamisch auftretenden Spitzenlasten aufzunehmen.

Vorteilhaft ist es außerdem, dass das modulare Innenausbausystem ein Wasser-/Abwasser-Modul und ein Stromversorgungsmodul umfasst, welche in deren montiertem Zustand im Fahrzeug in Fahrzeugquerrichtung Q gesehen zwischen sich einen Freiraum mit einer lichten Weite W lassen.

Dies trägt insbesondere zunehmenden Komfortanforderungen und/oder Funktionsanforderungen von Nutzern von Wohnmobilen Rechnung. Derartige Wasser-/Abwassermodule und Stromversorgungsmodule sind üblicherweise im Bereich der hinteren Radkästen von auszubauenden Kastenwägen angeordnet und überstülpen diese. Innenseiten von Radkästen bilden üblicherweise die engste Stelle eines Bodenbereichs eines Laderaums eines Kastenwagens, wobei die Wasser-/Abwasser-Module und das Stromversorgungmodul jeweils eine zur Fahrzeugmitte weisende Innenseite haben, die diese engste Stelle nicht oder nur unwesentlich in ihrer lichten Weite verengen und somit aufgrund ihrer Erstreckung in die Vertikalrichtung zwischen sich einen Freiraum definieren, dessen lichte Weite W kleiner ist als in den übrigen Bereichen des Kastenwagenbodens, beispielsweise zwischen Seitenwandungen des Fahrzeugs.

Weiterhin kann es zweckmäßig sein, dass die Breite des Möbelmoduls erster Art oder die Breite des Möbelmoduls zweiter Art die Hälfte, ein Drittel oder ein Viertel der lichten Weite W, abgerundet auf das nächstniedrigere ganzzahlige Vielfache des Längsrastermaßes beträgt.

Hierdurch gelingt ein guter Kompromiss zwischen einer praktischen Größe der Möbelmodule/Funktionsmodule hinsichtlich ihrer Breite und einer optimalen Raumausnutzung der lichten Weite W. Durch die Abrundung auf das nächstniedrigere ganzzahlige Vielfache des Längsrastermaßes ist eine spielbehaftete, also leicht herzustellende Anordnung der Möbelmodule/Funktionsmodule gewährleistet, ohne dass eine unerwünscht große Lücke zwischen diesen entsteht.

In der Praxis hat sich bewährt, dass das Längsrastermaß in einem Bereich zwischen 15mm und 50 mm liegt, bevorzugt 25 mm oder 25,4 mm beträgt.

Insbesondere zur Verwirklichung einer beliebig möglichen Anordnung von Möbelmodulen mit ihrer Möbelmodulfrontseite entlang der Fahrzeuglängsrichtung oder entlang der Fahrzeugquerrichtung hat es sich bewährt, dass das Querrastermaß ein drittes ganzzahliges Vielfaches des Längsrastermaßes ist.

Beispielsweise können das Möbelmodul erster Art und das Möbelmodul zweiter Art eines ausgewählt aus der nachfolgenden Auflistung sein:
- Stauraummodul mit einem Schiebekasten
- Sitzmodul
- Versorgungsmodul
- Küchenmodul

Durch die Bereitstellung unterschiedlicher Möbelmodul/Funktionsmodule können unterschiedliche Kundenwünsche hinsichtlich der Funktionalitäten dieser Module gewährleistet werden.

Weiterhin kann die Variabilität und die Vielfalt von anzuordnenden Möbelmodulen und deren Zweckmäßigkeit im Gebrauch dadurch gesteigert werden, dass das Sockelmodul eines ausgewählt aus der nachfolgenden Auflistung ist:
- starres Sockelmodul
   Einzelsockelmodul oder Mehrfachsockelmodul
- Linearauszugmodul;
- Dreheinheit

Dabei kann es insbesondere für großvolumige Möbelmodule/Funktionsmodule wie zum Beispiel einem Küchenmodul, zweckmäßig sein, dass das Sockelmodul in ein Möbelmodul erster Art und/oder in ein Möbelmodul zweiter Art integriert ausgebildet ist und lediglich die Bodenbefestigungseinrichtung aufweist.

Insbesondere zur Verwirklichung eines wahlweise gewünschten Längseinbaus (Front des Möbelmodul/Funktionsmoduls ist parallel zur Längsrichtung des Fahrzeuges) oder eines Quereinbaus (Front des Möbelmodul/Funktionsmoduls ist parallel zur Fahrzeugquerrichtung) hat es sich bewährt, dass im Falle eines geradzahligen Vielfachen des Längsrastermaßes (LRM) einer der Grundrissseiten und in Falle eines ungeradzahligen Vielfachen des Längsrastermaßes (LRM) einer anderen Grundrissseite die Lochmuster des Lochrastermusters um ein halbes Rastermaß versetzt sind.

Mit dieser Maßnahme gelingt es, auch Möbelmodule/Funktionsmodule sowohl mit geradzahligem Vielfachen und ungeradzahligem Vielfachen des Längsrastermaßes lückenlos oder nahezu lückenlos nebeneinander positionieren und befestigen zu können.

Weiterhin betrifft die Erfindung ein Möbelmodul/Funktionsmodul eingerichtet und ausgebildet zur Verwendung in dem modularen Innenausbausystem nach einem der vorhergehenden Ansprüche.

Weiterhin betrifft die Erfindung ein Sockelmodul eingerichtet und ausgebildet zur Verwendung in dem modularen Innenausbausystem nach einem der vorhergehenden Ansprüche.

Im Folgenden wird die Erfindung anhand der Zeichnung beispielhaften erläutert.

Es zeigen:
- Figur 1:: eine isometrische Ansicht auf eine Bodenstruktur eines modularen Innenausbausystems für ein Kraftfahrzeug mit einem in einer Fahrzeuglängsrichtung hinten seitlich einen Radkasten des Kraftfahrzeugs überbauenden Stromversorgungsmodul und gegenüberliegend einem Wasser-/Abwassermodul;
- Figur 1A:: ein Detail A aus Figur 1;
- Figur 2:: eine Draufsicht auf die Bodenstruktur gemäß Figur 1;
- Figur 3:: eine isometrische Ansicht auf die Bodenstruktur gemäß Figur 1 mit einer eingesetzten Anordnung aus Möbelmodulen erster Art, welche sich in einem Freiraum zwischen dem Stromversorgungsmodul und dem Wasser-/Abwassermodul befinden;
- Figur 4:: eine Vorderansicht auf die eingesetzte Anordnung aus Möbelmodul in erster Art gemäß Figur 3, welche auf einem Sockelmodul aufsitzen;
- Figur 5:: eine isometrische Ansicht auf ein Möbelmodul/Funktionsmodul erster Art von schräg oben mit geschlossenem Einschubelement;
- Figur 6:: das Möbelmodul gemäß Figur 5 mit geöffnetem Einschubelement;
- Figur 7:: eine teilfreigeschnittene isometrische Ansicht auf eine Innenseite von Wandungen zweier gestapelter Möbelmodule;
- Figur 8A:: eine isometrische Ansicht auf ein Sockelmodul; und
- Figur 8B:: eine Draufsicht auf das Sockelmodul aus Figur 8A.

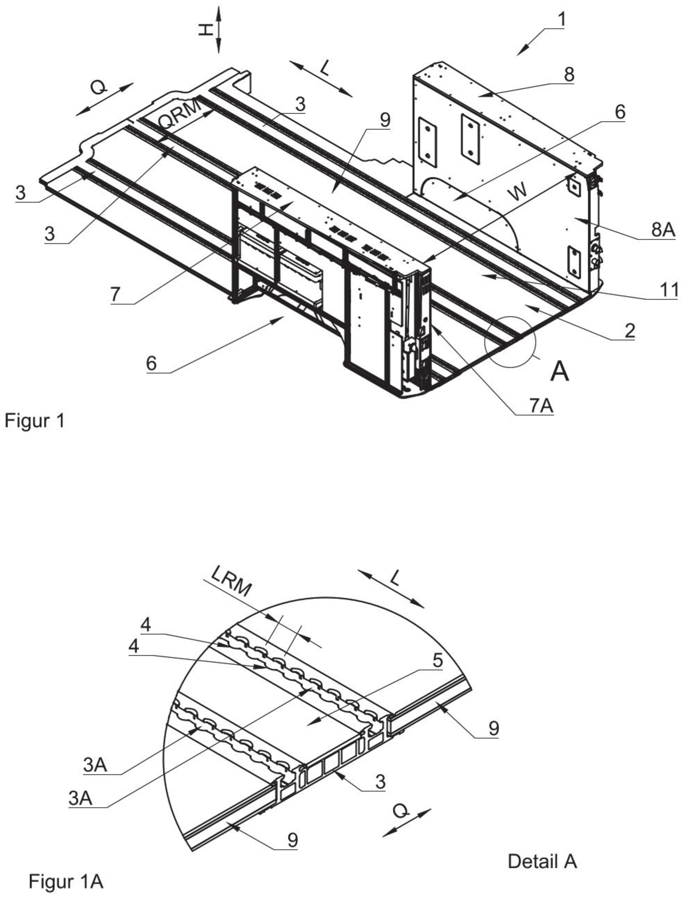

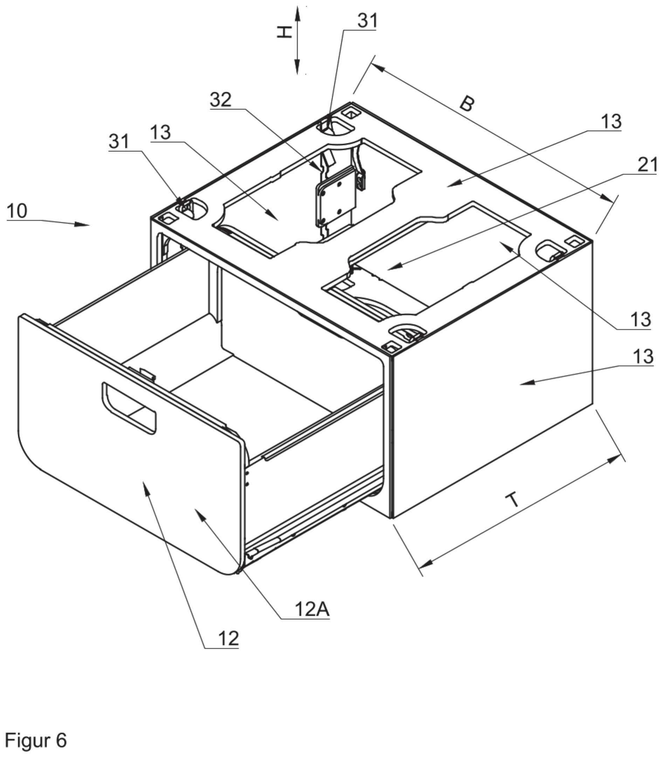

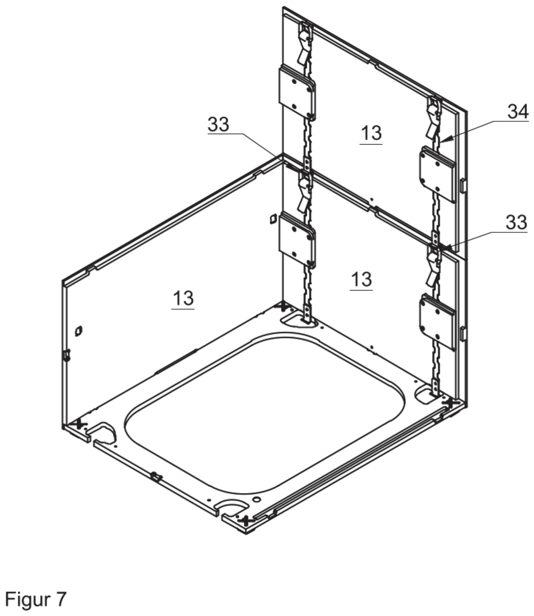

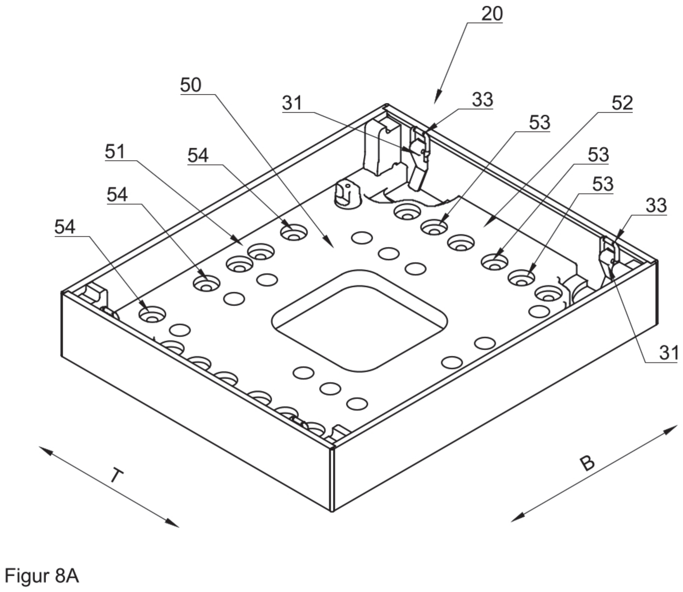

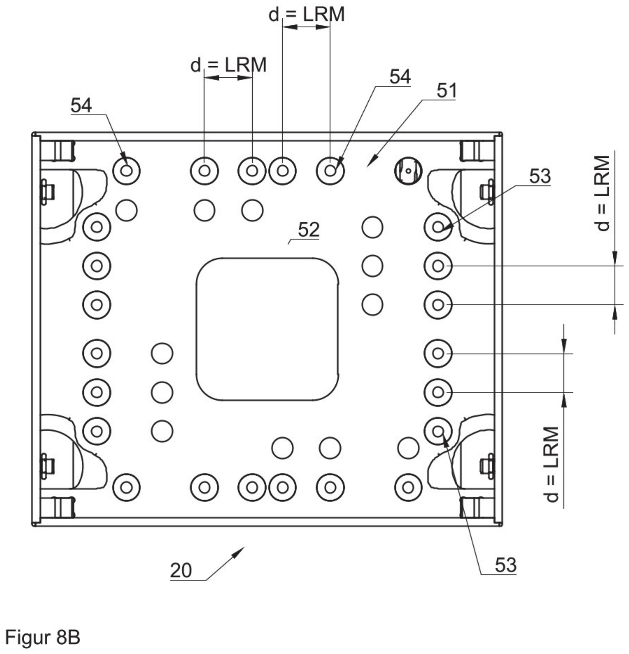

Im Folgenden wird ein modulares Innenausbausystem 1 für ein Kraftfahrzeug beispielhaft anhand der Figuren 1 bis 8 beschrieben.

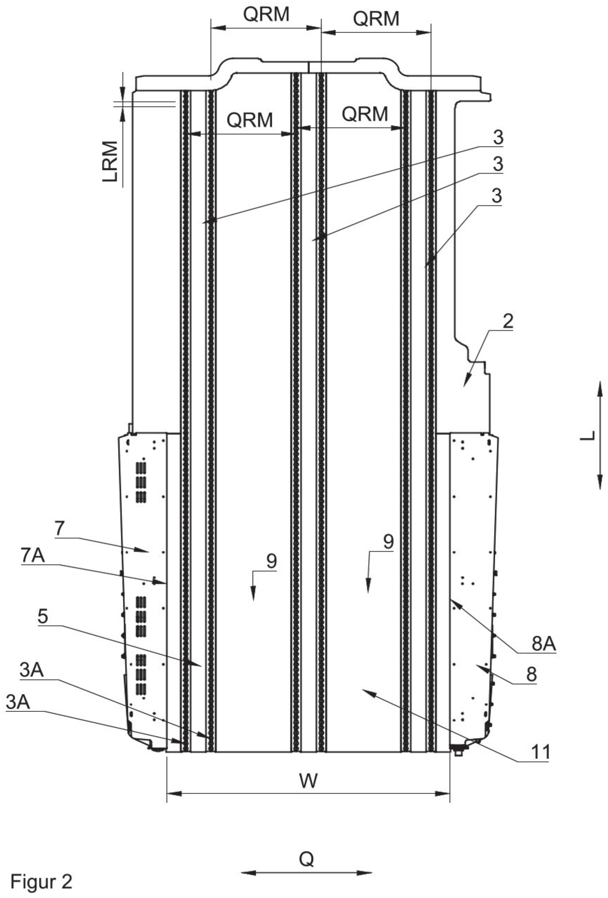

Figuren 1, 1A und 2 zeigen dabei eine Bodenstruktur 2, welche eine Mehrzahl von zueinander parallellaufenden Befestigungsschienen 3 aufweist. Die Befestigungsschienen 3 sind jeweils entlang ihrer Längserstreckung in Fahrzeuglängsrichtung L ausgerichtet. Die Befestigungsschienen 3 (vergleiche Figur 1A) sind beispielhaft als Doppelschienen mit zwei Befestigungsnuten 3A, welche parallel verlaufen und beabstandet zueinander angeordnet sind, ausgebildet. Auf einer Oberseite der Befestigungsnuten 3A ist eine Vielzahl von Durchgriffsöffnungen 4 vorhanden. Durch diese Durchgriffsöffnungen 4 können Positionierstifte (nicht gezeigt) und/oder Befestigungsschrauben (nicht gezeigt), welche mit Nutensteinen zusammenwirken, greifen. In der Fahrzeuglängsrichtung L gesehen weisen jeweils zwei benachbarte Durchgriffsöffnungen 4 als Abstand zwischen sich ein Längsrastermaß LRM auf. Das Längsrastermaß LRM liegt bevorzugt in einem Bereich zwischen 15 mm und 50 mm. In einer bevorzugten Ausführungsform sind die Befestigungsschienen 3 als sogenannte "Airline"-Schienen mit jeweils einer Befestigungsnut 3A oder, wie in den Figuren gezeigt, als Doppelnutschiene mit zwei parallel laufenden, einstückig über ein Mittelteil 5 verbundene Befestigungsnuten 3A ausgebildet.

In einem in Fahrzeuglängsrichtung L hinteren Bereich oberhalb von Radkästen 6 einer Hinterachse des Fahrzeuges sind Versorgungsmodule vorgesehen, welche beispielsweise als ein Stromversorgungsmodul 7 und ein Wasser-/Abwassermodul 8 ausgebildet sind.

In dem in den Figuren dargestellten Beispiel sind die Befestigungsschienen 3 als Doppelnutschienen ausgebildet, welche sich über nahezu die gesamte Länge eines Fahrzeugbodens in Fahrzeug Längsrichtung L erstrecken. In einer Fahrzeugquerrichtung Q sind die Befestigungsschienen 3 gleichmäßig beabstandet angeordnet. Im Ausführungsbeispiel sind insgesamt 3 Befestigungsschienen vorgesehen.

Mittellinien von korrespondierenden Befestigungsnuten 3A zweier benachbarter Befestigungsschienen 3 weisen in Fahrzeugquerrichtung Q ein Querrastermaß QRM auf, welches insbesondere ein ganzzahliges Vielfaches des Längsrastermaßes LRM ist, auf.

Zwischenräume zwischen benachbarten Befestigungsschienen sind zweckmäßigerweise mit Bodenplatten 9 gefüllt.

Die vorbeschriebene Bodenstruktur 2 bildet eine Montagebasis für Möbelmodule/Funktionsmodule, zum Beispiel ein Möbelmodul erster Art 10, welches beispielsweise ein Stauraummodul sein kann, und/oder ein Möbelmodul zweiter Art (nicht gezeigt), welches beispielsweise ein Küchenmodul sein kann.

Unabhängig vom gezeigten Ausführungsbeispiel liegen neben einem Möbelmodul erster Art 10 und einem nicht gezeigten Möbelmodul zweiter Art selbstverständlich auch weitere Arten von Möbelmodulen/Funktionsmodulen im Bereich der Erfindung. Solche weiteren Möbelmodule/Funktionsmodule können beispielsweise (nicht abschließend) ein Fahrzeugsitz, eine Fahrzeugsitzbank oder ein Tischmodul sein.

Das Stromversorgungsmodul 7 und das Wasser-/Abwassermodul 8 besitzen jeweils zur Fahrzeugmitte hin weisende Innenwandungen 7A, 8A, welche sich bevorzugt in Fahrzeuglängsrichtung L und in einer Fahrzeughochrichtung H parallel zueinander erstrecken und zwischen sich einen Freiraum 11 bilden. Der Freiraum 11 besitzt dabei eine lichte Weite W.

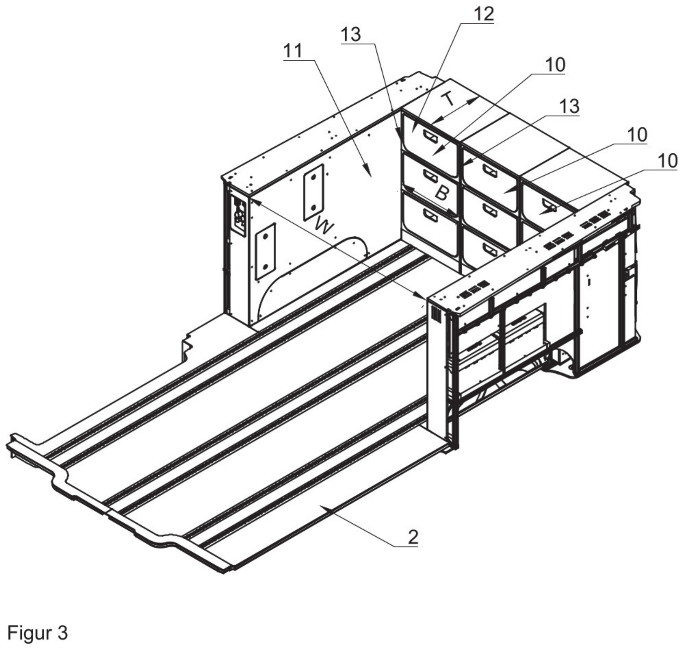

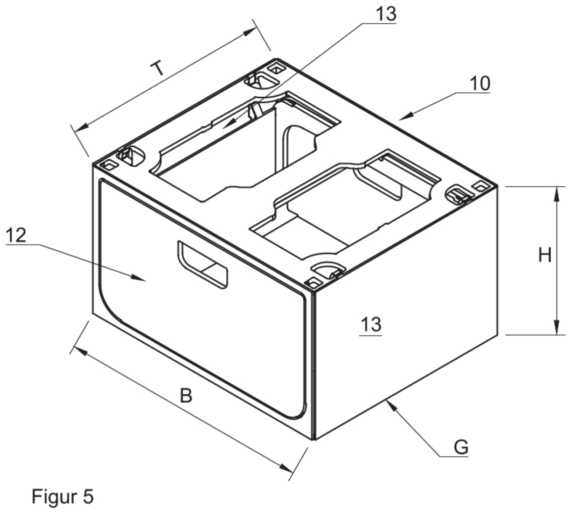

Figur 3 zeigt die in den Figuren 1 bis 2 vorbeschriebene Bodenstruktur 2 mit einer innerhalb des Freiraums 11 der lichten Weite W angeordneten Mehrfachanordnung von Möbelmodulen erster Art 10. Die Möbelmodule erster Art 10 besitzen eine Frontseite 12, welche im gezeigten Beispiel beispielsweise durch eine Wandung eines Schubkastens gebildet wird. Die horizontale Erstreckung der Frontseite 12 inklusive seitlicher Wandungen 13 des Möbelmoduls erster Art wird als Breite B des Möbelmoduls erster Art definiert. Eine in der Draufsicht rechtwinklig zur Breite B verlaufende Tiefe T des Möbelmoduls/Funktionsmoduls erster Art 10 (vergleiche auch Figur 5) definieren für die nachfolgende Beschreibung einen Grundriss G, welcher in Figur 5 zur Verdeutlichung in gestrichelten Linien dargestellt ist.

Die Breite B des Möbelmoduls/Funktionsmoduls erster Art 10 wie auch die Tiefe T des Möbelmoduls erster Art 10 sind erfindungsgemäß ein gegebenenfalls unterschiedlich ganzzahliges Vielfaches des Längsrastermaßes LRM.

Weiterhin ist die Breite B der Möbelmodule erster Art 10 und gegebenenfalls der Möbelmodule/Funktionsmodule zweiter oder anderer Arten (nicht gezeigt) im gezeigten Beispiel ein Drittel, alternativ die Hälfte oder ein Viertel der lichten Weite W abgerundet auf das nächste ganzzahlige Vielfache des Längsrastermaßes LRM. Hierdurch ist sichergestellt, dass einerseits die lichte Weite des Freiraums 11 optimal ausgenutzt ist, d.h. dass z.B. Möbelmodule erster Art 10 oder weitere Arten ohne nennenswerte Lücken im Freiraum 11 angeordnet werden können. Zum anderen ist durch die Abrundung auf das nächstniedrigere ganzzahliges Vielfache des Längsrastermaßes LRM gewährleistet, dass zwischen zwei benachbarten Möbelmodulen erster Art 10 Lücken 14 vorhanden sind, um ein gewisses Spiel zwischen benachbarten Möbelmodulen 10 zu erreichen.

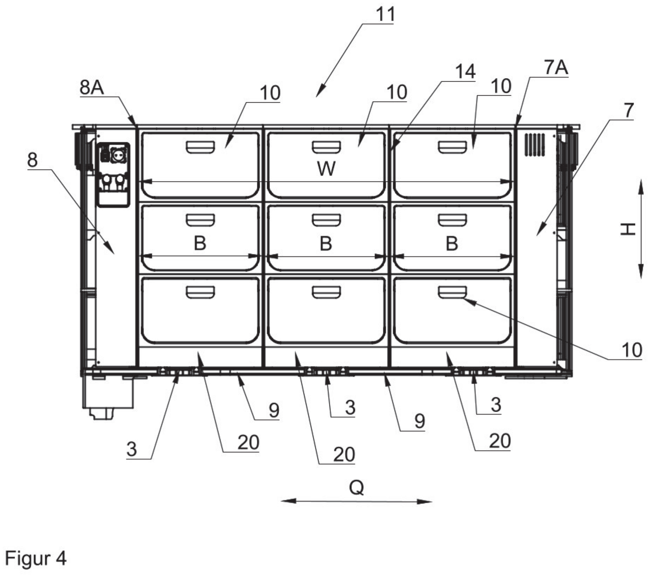

In der Darstellung gemäß Figur 4 sind die Möbelmodule erster Art 10 jeweils dreifach übereinandergestapelt angeordnet. Jeder Stapel aus Möbelmodulen erster Art 10 ist dabei auf einem Sockelmodul 20, welches weiter unten näher beschrieben werden wird, angeordnet. Selbstverständlich ist es auch möglich, zum Beispiel bei einer in Figur 4 dargestellten Anordnung anstelle dreier einzelner Sockelmodule 20 ein Mehrfachsockelmodul, welches sich beispielsweise über die gesamte lichte Weite W in Fahrzeugquerrichtung Q erstreckt, auszubilden.

Im Folgenden wird anhand der Figuren 5, 6 und 7 am Beispiel eines Möbelmoduls/Funktionsmoduls erster Art 10 dessen Aufbau, insbesondere ein Zugbefestigungsmittel 30, welches in der Hochrichtung H Vertikalkräfte zwischen übereinander gestapelten Möbelmodulen/Funktionsmodulen erster Art 10 gegebenenfalls auch gemischt mit Möbelmodulen/Funktionsmodulen einer weiteren Art übertragen kann.

Die Wandungen 13 umgrenzen einen Innenraum 21 des Möbelmoduls erster Art 10, welches beispielsweise eine Schublade 12A aufnimmt.

Im Innenraum 21, insbesondere an den Wandungen 13, welche das Möbelmodul erster Art 10 in der Breite B begrenzen, sind Zugbefestigungsmittel 30 vorgesehen. Die Zugbefestigungsmittel 30 sind als Schnapphakenverbindungen mit endseitigen Schnapphaken 31 ausgebildet, welche mit sich in Hochrichtung H also im eingebauten Zustand in vertikaler Richtung des Fahrzeuges erstreckenden Zugstreben 32 zusammenwirken. Die Zugstreben 32 sind beispielsweise bandartige Flachprofile aus Metall, zum Beispiel Aluminium, welche in der Lage sind, auf Zug belastet eine hohe Last übertragen zu können. Die Schnapphaken 31 sind derart eingerichtet und ausgebildet, dass sie mit einem korrespondierenden Bügelelement 33 im Bereich einer Unterseite des Möbelmoduls erster Art 10 zusammenwirken können und somit einen vertikalen Spannverbund zweier übereinandergestapelter Möbelmodule erster Art 10 ausbilden können.

Die Zugstreben 32 sind als lang gestreckte Metallbänder ausgebildet und weisen entlang ihrer Längsstirnseiten beispielsweise eine Vielzahl von Ausnehmungen 34 auf. Zudem sind die Zugstreben 32 in taschenartigen Ausnehmungen der Wandungen 13 eingebettet, deren Außenkontur der Außenkontur der Zugstreben 32 entspricht, so dass in Längsrichtung der Zugstreben 32 eine formschlüssige Kraftübertragung von Zugkräften auf die Wandungen 13 ermöglicht ist. Dies verringert eine übermäßige lokale Beanspruchung der Wandungen 13 durch eine Zugkrafteinleitung, da die Wandungen üblicherweise aus einem Holz- oder Kunststoffwerkstoff hergestellt sind. Hierdurch ist es somit möglich, im Falle von dynamisch auftretenden Spitzenlasten, wie sie beispielsweise im Falle eines Unfalls oder im Falle einer sehr starken schwankenden Aufbaubewegung des Fahrzeugs auftreten können, auftretende Zugkräfte zwischen den Möbelmodulen zuverlässig zu übertragen.

Zur Übertragung von dynamischen Kräften in die Bodenstruktur 2 sind die Sockelmodule 20 vorgesehen. Die Sockelmodule 20 weisen an ihrer vertikal nach oben gerichteten Oberseite eine Modul-Befestigungseinrichtung 40 auf, mittels der ein Sockelmodul 20 unter Zuhilfenahme der Zugbefestigungsmittel 30 ausreichend fest mit einem Möbelmodul/Funktionsmodul erster Art 10 oder mit einem Möbelmodul/Funktionsmodulen anderer Art verbindbar ist.

Das Sockelmodul 20 weist an seiner vertikal unteren Seite zudem eine Bodenbefestigungseinrichtung 50 auf, welche eingerichtet und ausgebildet ist, eine zugkraftübertragungsfähige Verbindung des Sockelmoduls 20 mit der Bodenstruktur 2 durch Verankerung des Sockelmoduls 20 an den Befestigungsschienen 3 zu gewährleisten. Eine solche Bodenbefestigungseinrichtung 50 kann seitens des Sockelmoduls 20 in Form eines Lochrastermusters 51 einer Bodenplatte 52 bereitgestellt werden, welches es erlaubt, das Sockelmodul 20 sowohl in Längsrichtung L als auch in Querrichtung Q bezüglich der Befestigungsschienen 3 mechanisch formschlüssig lösbar zu befestigen. Ein derartiges Lochrastermuster 51 besitzt somit zweckmäßigerweise Löcher 53 parallel zur Tiefenrichtung T und Löcher 54 parallel zur Breitenrichtung B mit einem Abstand d zueinander, der dem Längsrastermaß LRM entspricht.

Dabei ist es besonders zweckmäßig, dass bei einem geradzahligen Vielfachen des Längsrasteremaßes LRM einer Grundrissseite des Grundrisses G, d. h. der Breite B oder der Tiefe T und einem ungeradzahligen Vielfachen des Längsrastermaßes LRM der korrespondierenden anderen Grundrissseite des Grundrisses G, d. h. der Tiefe T oder der Breite B, die Lochmuster des Lochrastermusters 51 um ein halbes Längsrastermaß LRM zueinander versetzt sind. Hierdurch gelingt es, sowohl in einer Einbaulage, in der die Frontseite 12 in Querrichtung Q verläuft als auch in einer Einbaulage des Sockelmoduls 20, in der die Frontseite 12 in Längsrichtung L des Fahrzeugs verläuft, bei Bedarf eine lückenlose Aneinanderreihung der Module auf der Bodenstruktur 2 zu verwirklichen.

Zur Befestigung des Sockelmoduls 20 auf der Bodenstruktur 2 kann es beispielsweise zweckmäßig sein, Positionierstifte durch Löcher des Lochrastermusters 51 zu stecken, um das Sockelmodul 20 relativ zur Bodenstruktur 2 zu positionieren. Die Positionierstifte greifen dabei in ausgewählte Durchgriffsöffnungen 4 der Befestigungsschienen 3 ein und legen somit das Sockelmodul 20 in Längsrichtung L und in Querrichtung Q formschlüssig fest. Zur Ausbildung einer mechanisch formschlüssigen, lösbaren Verbindung in Hochrichtung H können zweckmäßigerweise Nutsteine in die Befestigungsnuten 3A eingesetzt werden und mittels geeigneter Schrauben oder Bolzen, welche das Lochrastermusters 51 des Sockelmoduls 20 durchgreifen, das Sockelmoduls 20 bezüglich der Bodenstruktur 2 in vertikaler Richtung (Hochrichtung H) festlegen.

### Bezugszeichenliste

- 1: Modulares Innenausbausystem
- 2: Bodenstruktur
- 3: Befestigungsschiene
- 3A: Befestigungsnut
- 4: Durchgriffsöffnungen
- 5: Mittelteil
- 6: Radkasten
- 7: Stromversorgungsmodul
- 8: Wasser-/Abwassermodul
- 9: Platte
- 10: Möbelmodul/Funktionsmodul erster Art
- 11: Freiraum
- 12: Frontseite
- 13: Wandungen
- 14: Lücken
- 20: Sockelmodul
- 21: Innenraum
- 30: Zugbefestigungsmittel
- 31: Schnapphaken
- 32: Zugstrebe
- 33: Bügelelement
- 34: Ausnehmung
- 40: Modulbefestigungseinrichtung
- 50: Bodenbefestigungseinrichtung
- 51: Lochrastermuster
- 52: Bodenplatte des Sockelmoduls
- 53: Löcher parallel zur Tiefenrichtung T
- 54: Löcher parallel zur Breitenrichtung B
- L: Fahrzeuglängsrichtung
- Q: Fahrzeugquerrichtung
- LRM: Längsrastermaß
- QRM: Querrastermaß
- G: Grundriss
- B: Breite
- T: Tiefe
- H: Hochrichtung
- W: lichte Weite
- d: Abstand =LRM

## Patentansprüche

1. Modulares Innenausbausystem für Kraftfahrzeuge, insbesondere zur Ausbildung eines Wohnmobil-Innenausbaus mit
- einer Bodenstruktur (2) aufweisend eine Mehrzahl von zueinander parallellaufenden Befestigungsschienen (3), welche sich in einer Fahrzeuglängsrichtung (L) erstrecken
- wenigstens einem Möbelmodul/Funktionsmodul erster Art (10) (im Folgenden:
Möbelmodul erster Art), welches eingerichtet und ausgebildet ist, mittelbar oder unmittelbar mechanisch lösbar, insbesondere formschlüssig mit den Befestigungsschienen (3) verbunden zu werden,
- **dadurch gekennzeichnet, dass**
- die Befestigungsschienen (3) entlang ihrer Längsrichtung (L) ein Längsraster mit einem Längsrastermaß (LRM) zur Ausbildung der mechanisch lösbaren, insbesondere formschlüssigen Verbindung zwischen der Befestigungsschiene (3) und dem Möbelmodul erster Art (10) aufweisen und
- die Befestigungsschienen (3) in einer Fahrzeugquerrichtung (Q) in einem Querraster mit einem Querrastermaß (QRM) zueinander angeordnet sind,
- wobei ein Grundriss (G) des wenigstens einen Möbelmoduls erster Art (10) eine erste Breite (B) und eine erste Tiefe (T) besitzt, wobei sowohl die erste Breite (B) ein erstes ganzzahliges Vielfaches des Längsrastermaßes (LRM) als auch die erste Tiefe (T) ein zweites ganzzahliges Vielfaches des Längsrastermaßes (LRM) sind.

2. Modulares Innenausbausystem nach Anspruch 1, **dadurch gekennzeichnet dass** das modulare Innenausbausystem (1) wenigstens ein Möbelmodul/Funktionsmodul zweiter Art (im Folgenden Möbelmodul zweiter Art) aufweist, dessen Grundriss eine zweite Breite und eine zweite Tiefe besitzt, wobei die zweite Breite und/oder die zweite Tiefe unterschiedlich oder gleich zur ersten Breite (B) oder der ersten Tiefe (T) sind und sowohl die zweite Breite ein zweites ganzzahliges Vielfaches des Längsrastermaßes (LRM) als auch die zweite Tiefe ein zweites ganzzahliges Vielfaches des Längsrastermaßes (LRM) sind.

3. Modulares Innenausbausystem nach Anspruch 1 oder 2, **dadurch gekennzeichnet, dass** die Möbelmodule (10) Wandungen (13) besitzen, welche einen Innenraum (21) umgrenzen, und vertikal wirkende Zugbefestigungsmittel (30) zum Zusammenwirken mit korrespondierenden vertikalen Zugbefestigungsmitteln (30) eines anderen Möbelmoduls (10) aufweisen und die Zugbefestigungsmittel (30) im Innenraum (21) angeordnet und vom Innenraum (21) her bedienbar sind.

4. Modulares Innenausbausystem nach einem der vorangegangenen Ansprüche, **dadurch gekennzeichnet, dass** das modulare Innenausbausystem (1) wenigstens ein Sockelmodul (20) umfasst, welches eine Bodenbefestigungseinrichtung (50) zur Befestigung an den Befestigungsschienen (3) und wenigstens eine Modulbefestigungseinrichtung zum Zusammenwirken mit dem Zugbefestigungsmittel (30) des Möbelmoduls (10) aufweist.

5. Modulares Innenausbausystem nach einem der vorangegangenen Ansprüche, **dadurch gekennzeichnet, dass** mehrere Möbelmodule (10) vertikal übereinander stapelbar und mittels der Zugbefestigungsmittel (30) im gestapelten Zustand miteinander in Höhenrichtung (H) vorgespannt verbindbar sind, wobei die Zugbefestigungsmittel (30) der Möbelmodule (10) insbesondere Schnapphakenverbindungen mit Schnapphaken (31) sind, die mit vertikal verlaufenden Zugstreben (32) zusammenwirken.

6. Modulares Innenausbausystem nach einem der vorangegangenen Ansprüche, **dadurch gekennzeichnet, dass** eine Zugkraftübertragung der Zugbefestigungsmittel (30) in die Wandung (13) des Möbelmoduls (10) im Bereich eines vertikal mittleren Drittels der Wandung (13) erfolgt oder mittels formschlüssiger, z.B. verzahnter Einbettung der Zugstrebe (32) in die Wandung (13) entlang einer Längserstreckung der Zugstrebe (32) erfolgt, wobei die Zugstrebe (31) insbesondere vertikal durchgehend ausgebildet ist..

7. Modulares Innenausbausystem nach einem der vorangegangenen Ansprüche, **dadurch gekennzeichnet, dass** das modulare Innenausbausystem (1) ein Wasser-/Abwasser-Modul (8) und ein Stromversorgungsmodul (7) umfasst, welche in deren montiertem Zustand im Fahrzeug in Fahrzeugquerrichtung (Q) gesehen zwischen sich einen Freiraum (11) mit einer lichten Weite (W) lassen.

8. Modulares Innenausbausystem nach einem der vorangegangenen Ansprüche, **dadurch gekennzeichnet, dass** die erste Breite des Möbelmoduls erster Art (10) oder die zweite Breite des Möbelmoduls zweiter Art die Hälfte, ein Drittel oder ein Viertel der lichten Weite (W), abgerundet auf das nächstniedrigere ganzzahlige Vielfache des Längsrastermaßes (LRM) beträgt, wobei das Längsrastermaß (LRM) insbesondere in einem Bereich zwischen 15mm und 50mm liegt, bevorzugt 25 mm oder 25,4 mm beträgt..

9. Modulares Innenausbausystem nach einem der vorangegangenen Ansprüche, **dadurch gekennzeichnet, dass** das Querrastermaß (QRM) ein drittes ganzzahliges Vielfaches des Längsrastermaßes (LRM) ist.

10. Modulares Innenausbausystem nach einem der vorangegangenen Ansprüche, **dadurch gekennzeichnet, dass** das Möbelmodul erster Art (10) und das Möbelmodul zweiter Art eines ausgewählt aus der nachfolgenden Auflistung ist:
- Stauraummmodul mit einem Schiebekasten
- Sitzmodul
- Versorgungsmodul
- Küchenmodul und/oder
das Sockelmodul (20) eines ausgewählt aus der nachfolgenden Auflistung ist:
- starres Sockelmodul
- Einzelsockelmodul oder Mehrfachsockelmodul
- Linearauszugmodul;
- Dreheinheit

11. Modulares Innenausbausystem nach einem der vorangegangenen Ansprüche, **dadurch gekennzeichnet, dass** das Sockelmodul (20) in ein Möbelmodul erster Art (10) und/oder in ein Möbelmodul zweiter Art integriert ausgebildet ist und lediglich die Bodenbefestigungseinrichtung (50) aufweist.

12. Modulares Innenausbausystem nach einem der vorangegangenen Ansprüche, **dadurch gekennzeichnet, dass** die Bodenbefestigungseinrichtung (50) des Sockelmoduls (20) ein Lochrastermuster (51) besitzt, welches in der Breitenrichtung des Sockelmoduls (20) und in der Tiefenrichtung des Sockelmoduls das Längsrastermaß (LRM) besitzt.

13. Modulares Innenausbausystem nach einem der vorangegangenen Ansprüche, **dadurch gekennzeichnet, dass** im Falle eines geradzahligen Vielfachen des Längsrastermaßes (LRM) einer der Grundrissseiten und in Falle eines ungeradzahligen Vielfachen des Längsrastermaßes (LRM) einer anderen Grundrissseite die Lochmuster des Lochrastermusters (51) um ein halbes Rastermaß versetzt sind.

14. Möbelmodul/Funktionsmodul eingerichtet und ausgebildet zur Verwendung in dem modularen Innenausbausystem nach einem der vorhergehenden Ansprüche.

15. Sockelmodul eingerichtet und ausgebildet zur Verwendung in dem modularen Innenausbausystem nach einem der Ansprüche 1 bis 13.
